# EUROPEAN PATENT APPLICATION

(11) **EP 3 282 128 A1**
(43) Date of publication of application: **14.02.2018**
(21) Application number: 17185059.7
(22) Date of filing: 07.08.2017
(51) Int. Cl.: F04D 13/06, F04D 29/041

(54) **IMPROVED ELECTRIC MOTOR FOR A FLUID CIRCULATOR**

(30) Priority: 10.08.2016 IT 201600084440
(71) Applicant: TACO ITALIA S.r.l., 36066 Sandrigo (VI) (IT)
(72) Inventor: BEDIN, Dario, 36033 Marostica (Vicenza) (IT); MONDIN, Roberto, 31038 Paese (Treviso) (IT)
(74) Representative: Botti, Mario

(57) **Abstract**

Improved electric motor for a fluid circulator comprising a permanent magnet rotor (2), a stator (3), in which a supporting and containing hollow body (4) for the rotor (2) is housed, an impeller (5), a shaft (6) of the electric motor kinematically coupled to the rotor (2) and to the impeller (5) for activating the impeller (5) in rotation. Advantageously, the rotor (2) comprises an axial thrust bearing member (7; 10), made of anti-friction material and adapted for supporting axil loads produced during the fluid circulation in the circulator, said thrust bearing member being integrated inside the rotor itself, so that the thrust bearing member does not separate from the rotor during a motor disassembly.

## Description

### Field of application

The present invention relates to a synchronous permanent magnet motor preferably used in fluid driving pumps and, in particular, circulators for fluid heating and/or cooling plants.

### Prior art

Centrifugal electric pumps, generally known with the name of circulators, are used for the circulation of the vector fluid in the context of heating plants.

As known in the technical field, a circulator generally comprises a synchronous electric motor, the rotor of which is clamped on a shaft that has an end kinematically coupled to an impeller activated by the electric motor itself.

The circulators can have impellers of various shapes and propulsion purposes for the treated fluid; in the case of impellers having curved blades of the centrifugal type, the pulse given to the fluid produces an axial thrust due to the pressure gradient that is produced between the suction and delivery areas in the volute where the impeller rotates. In centrifugal pumps, the above areas are always placed with the suction area belonging to the impeller in axis with the rotation shaft and the delivery in an annular area outside the diameter of the impeller and coplanar thereto.

This arrangement produces an axial thrust acting on the impeller, resulting from the axial component of the difference between the pressure range upstream and downstream of the impeller; the thrust is such as to bring the suction mouth of the impeller close towards the duct that drives the fluid.

In the type of electric pumps for fluids involved by the present invention electric pumps are known in which the electric motor is of the synchronous type and the permanent magnet rotor is housed in a hollow body, called tube, within the stator pack and the windings. The pack with the windings is separated and isolated from the hollow body to ensure electric insulation, but the rotor is housed inside the stator pack in a removable manner to allow an easy assembly and possible extraction for maintenance purposes.

In the state of the art it is known to support the rotor with supporting bushes made of anti-friction material: the bush on the side of the impeller also supports the axial thrust transmitted by the impeller to the motor through the motor shaft. The contact between the axial abutment of the supporting bush and the rotor occurs through a thrust bearing disc made of a hard and abrasion-resistant material, inserted between the axial abutment and the side of the rotor. Said disc is generally placed by means of an annular seat which is recessed and made integral with the motor shaft: the seat and the disc are axially blocked on the shaft in a proper position in order to centrally place the rotor on the stator.

A known solution is disclosed for instance in the European patent application No. EP 1 612 427 A1 wherein said bearing disc has been removed so that the axial thrust is supported directly by one side of the rotor. However, this solution has shown resistance problems and the working life of this kind of motors is reduced.

Therefore, in the state of the art, the axial thrusts support is known through the interposition of a suitable member, precisely the thrust bearing disc, and of additional accessory parts such as the containing annular seat made of elastic material.

The technical problem underlying the present invention is that to conceive an electric motor for a fluid circulator comprising a thrust bearing member of simplified construction, reducing the axial dimensions, making the assembly more practical and simplifying the maintenance of the axial thrust bearing on the impeller side, all this in the perspective of a simple and rational constructive solution.

Aim of the present invention is to meet the above need meanwhile overcoming the above-mentioned drawbacks of the prior art.

### Summary of the invention

Said aim is achieved by an electric motor for a fluid circulator in accordance with claim 1 of the present invention.

The dependent claims outline preferred and particularly advantageous embodiments of the connection unit according to the invention.

Further features and advantages will become clearer from the detailed description below reported of a preferred, but not exclusive, embodiment of the present invention, with reference to the enclosed figures given by way of example and not for limiting purposes.

### Brief description of the drawings

Figure 1 shows a perspective view of a circulator comprising an electric motor in accordance with the present invention;
figure 2 shows a section view of the circulator of figure 1 with an electric motor made in accordance with a first embodiment;
figure 3 shows a section view of the circulator of figure 1 with an electric motor made in accordance with a second embodiment;
figure 4 shows a magnet with an axial thrust bearing member in accordance with the first embodiment of the invention;
figure 5 shows a magnet with an axial thrust bearing member in accordance with figure 4;
figure 6 shows a magnet with an axial thrust bearing member in accordance with the second embodiment of the invention.

### Detailed description

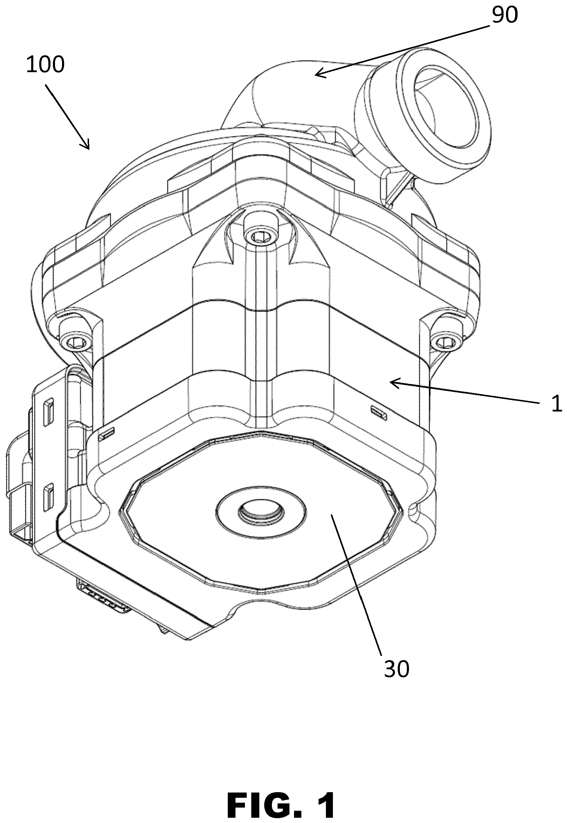

With reference to the enclosed figures 1-3, 100 denotes a circulator, namely an electric pump made according to the present invention. The circulator comprises and is activated by a synchronous permanent magnet electric motor 1 and is intended for driving fluids and in particular in heating and/or cooling plants.

Generally, the circulator 100 is made through the coupling of a pump 90 and of the electric motor 1.

The electric motor 1 comprises a permanent magnet rotor 2, a stator 3, in which a sleeve 21 for supporting and containing the rotor 2 is housed, an impeller 5 and a shaft 6 of the electric motor that is integral with the rotor and kinematically coupled to the impeller 5 for activating the impeller 5 in rotation.

The rotor 2 and the shaft 6 are housed in the separator sleeve 21 that isolates them from the stator 3. The sleeve 21 has a tubular body 22 made of plastic material and tapered at one end 18 and having the opposite open end integrally connected with a flange 24.

Inside the tubular body 22 the rotor 2 is housed with the respective shaft 6 that protrudes towards the inner part of the end 18 where a bearing support for supporting the motor shaft 6 is usually provided.

The end 18 of the sleeve 21 is closed by a removable cup 25 that is provided with a lowered notch 27 for the insertion of a maneuvering tool, mounted with interposition of a sealing gasket on the end 18.

The flange 24 is closed by a cup 30, in turn made of plastic material, which represents a separation wall between the sleeve 21 and the pump body 90 of the pump 1. The plastic material which the flange 24 is made of is the same as the one which the cup 30 is made of.

Substantially, the cup 30 is a disc made of plastic synthetic material that constitutes a separation wall between the sleeve for housing the rotor 2 and the volute 4 in which the impeller 5 rotates, namely the volute 4 of the pump body 90. The motor shaft 6 axially crosses the cup 30 and is kematically connected to the impeller 5 through an interference clamping on a brass insert molded with the impeller itself.

In accordance with the present invention, the rotor 2 comprises an axial thrust bearing member 7 made of anti-friction material adapted for supporting axial loads that are produced during the fluid circulation in the circulator.

The thrust bearing member is placed directly in contact with a bushing bearing 20 clamped on the motor shaft and interposed between the rotor 2 and the impeller 5.

Advantageously, in accordance with the present invention, said thrust bearing member is integrated inside the rotor 2 itself, so that the thrust bearing member does not separate from the rotor 2 during disassembly of the electric motor 1.

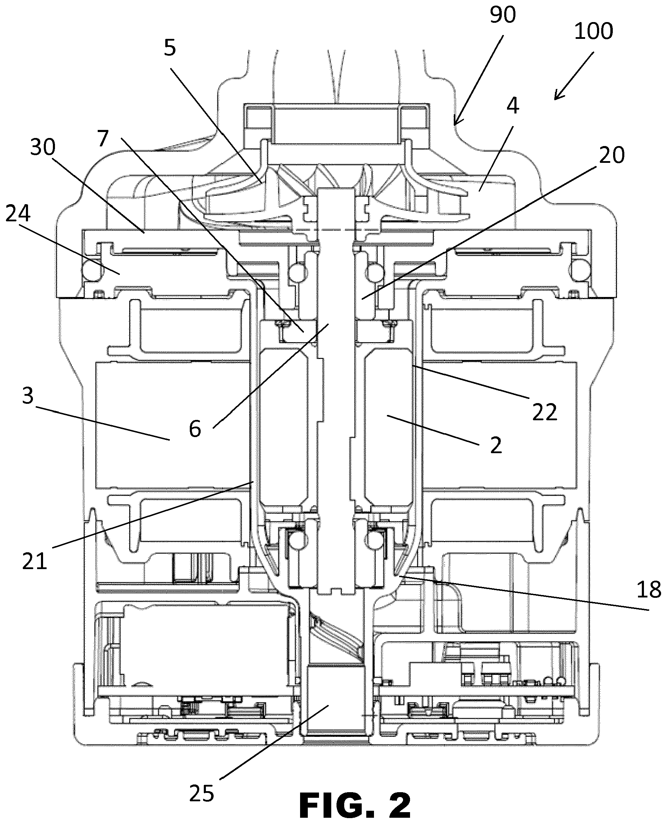

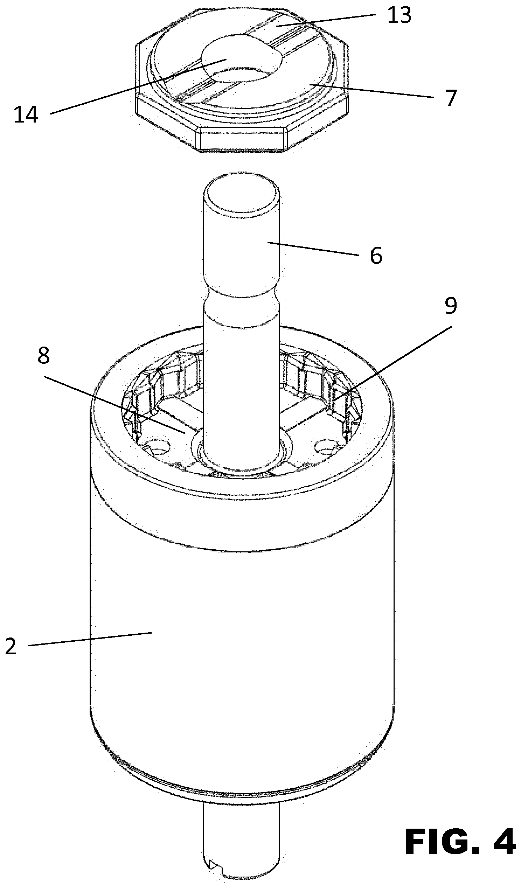

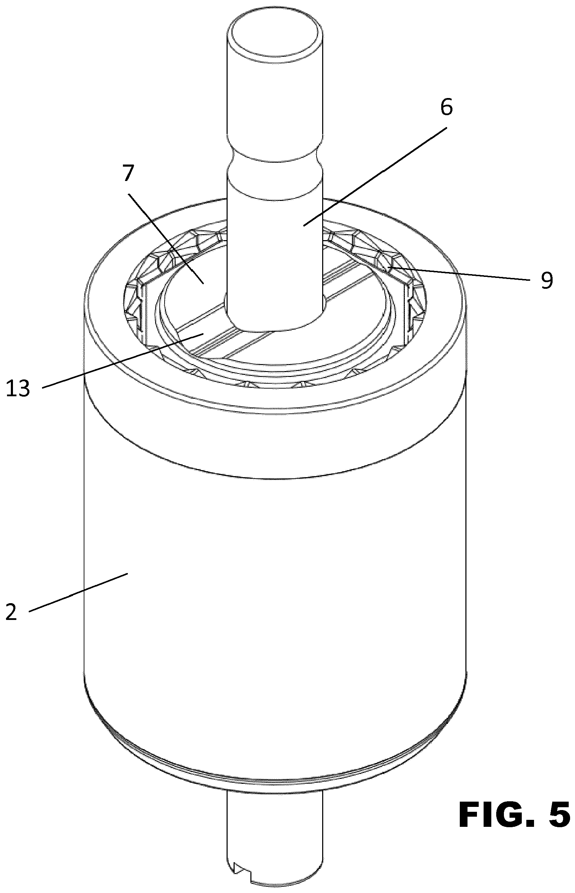

In accordance with a first embodiment, shown in figures 2, 4 and 5, the thrust bearing member is made of an insert 7 shaped in order to fit in a track 8 having a shape such as to block the rotation of the insert relative to the rotor 2. Specifically, this insert 7 comprises a hole 14, placed centrally, for precisely fitting inside the motor shaft.

Preferably, the insert 7 has an edge having a polygonal profile; in the example shown it is octagonal.

In order to block the insert 7 inside the track 8, the rotor 2 is provided with a multifaceted lateral side 9.

Specifically, there is an octagonal insert 7 the lateral sides of which fit on the multifaceted side 9 of the track 8 obtained on the rotor 2.

The side 9 has a circular configuration with axis corresponding to the axis of the motor shaft 6. Furthermore, this side 9 extends by a height such as not to have the insert 7 coming out of the stack 8, once it has been fitted.

In this way, once fitted inside the stack 8, the insert 7 becomes an integral part of the rotor 2, since it is blocked by the multifaceted sides of the stack.

This configuration allows having a rotor with an axial extension not increased by the presence of the insert 7 that performs the axial thrust bearing function.

Clearly, the stack is directly obtained on the side of the rotor 2 that receives the insert 7; in particular, on the side facing towards the impeller 5.

In order to ensure a high durability, the insert 7 can be made of a ceramic material based on alumina. Alternatively, graphite or a techno-polymer can be used.

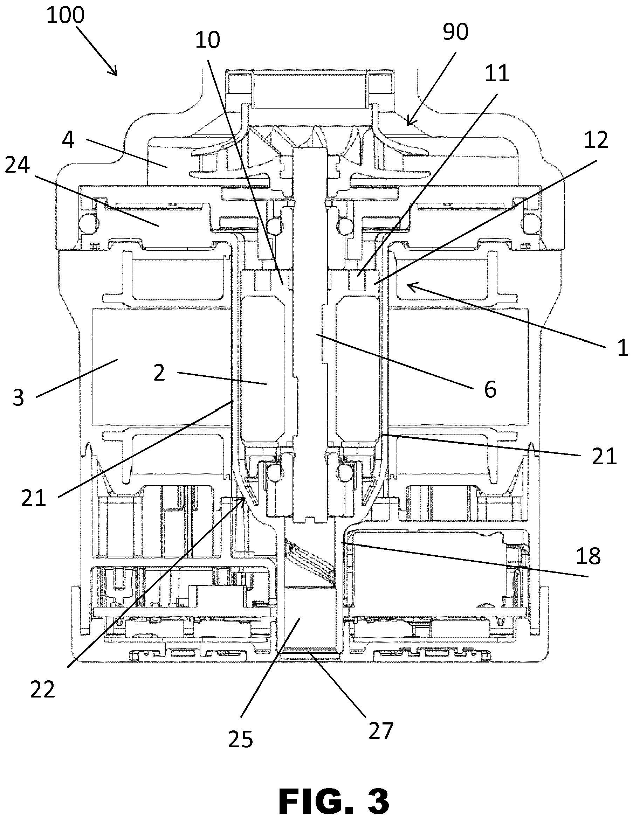

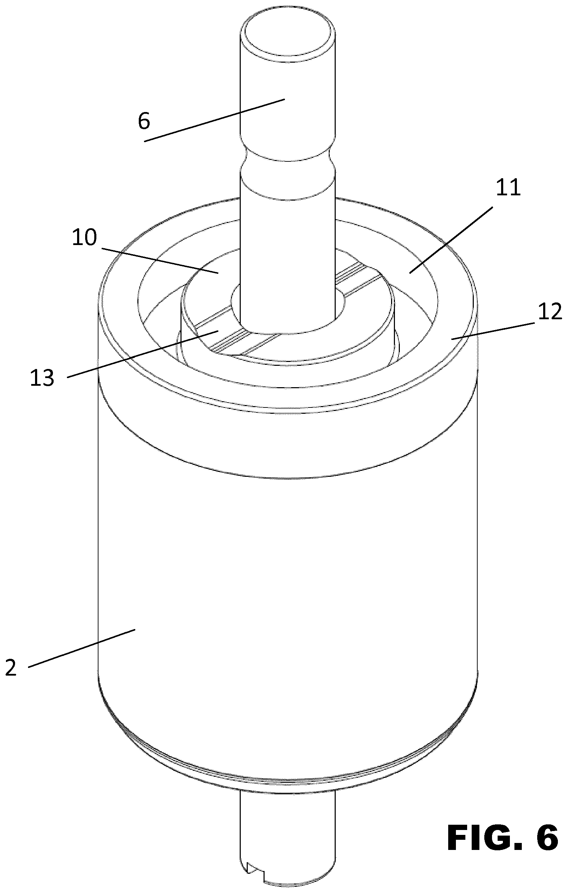

In accordance with a second embodiment, shown in figures 3 and 6, the thrust bearing member is made of an insert 10 integrated and is made as an enbloc with the material that covers the magnet of the rotor 2.

In practice, instead of having a separated insert that fits inside a track (as in the first embodiment), there is an integrated insert that is directly made during the forming of the rotor 2 magnet cover.

In the example shown, this integrated insert 10 is placed centrally to surround the shaft 6 on a side of the rotor. Outside the integrated insert 10 an annular groove 11 is present, which is in turn surrounded by an annular part 12 forming the most outer portion of the rotor 2 itself.

Preferably this integrated insert 10 is made of plastic material of the same type as the one used for the cover of the rotor magnet.

In order to improve lubrication, the thrust bearing member, in the two embodiments thereof, has an endorsed portion on the face facing towards the impeller 5.

In the example, there is a diametrical groove 13, interrupted in the central area of passage of the shaft 6, placed on the face of the thrust bearing member that comes into contact with the bush 20, said shaft 6 being clamped on the motor shaft and being interposed between the rotor 2 and the impeller 5.

Obviously, the skilled person, in order to meet contingent and specific needs, can make numerous changes and variants to the electric motor for a fluid circulator above disclosed, all within the scope of protection of the invention as outlined in the following claims.

## Claims

1. Electric motor for a circulator pump comprising a permanent magnet rotor (2), a stator (3), in which a supporting and containing hollow body (4) for the rotor (2) is housed, an impeller (5), a shaft (6) of the electric motor kinematically coupled to the rotor (2) and the impeller (5) for activating the impeller (5) in rotation, said rotor (2) comprising an axial thrust bearing member (7 ; 10) made of anti-friction material and adapted for supporting axial loads produced during the fluid circulation in the circulator, said thrust bearing member being integrated inside the rotor itself, so that the thrust bearing member does not separate from the rotor during a motor disassembly, **characterized in that** said thrust bearing member is formed by an insert (7) shaped in order to securely fit in a track (8) having a shape such as to block the rotation of the insert (7) relative to the rotor (2), said insert (7) comprising a hole (14) for precisely fitting inside the motor shaft (6) and being placed directly in contact with a bushing bearing (20) interposed between the rotor (2) and the impeller (5).

2. Electric motor according to claim 1, wherein said insert (7) comprises an edge having a polygonal profile, preferably octagonal.

3. Electric motor according to claim 2, wherein said track (8) comprises a side (9) embracing the insert edge (7), said side (9) being multifaceted.

4. Electric motor according to any one of previous claims, wherein said insert (7) is made of a ceramic material based on alumina.

5. Electric motor according to any one of previous claims, wherein said insert (7) is made of graphite or any other techno-polymer.

6. Electric motor according to claim 1, wherein said thrust bearing member is formed by an insert (10) integrally formed with the material covering the motor magnet (2).

7. Electric motor according to claim 6, wherein said insert (10) is made of plastic material.

8. Electric motor according to any one of previous claim, wherein said thrust bearing member is placed directly in contact with a bushing bearing (20) clamped on the motor shaft (6) and interposed between the rotor (2) and the impeller (5).

9. Electric motor according to any one of previous claims, wherein said thrust bearing member presents a hollow portion (13) facing the impeller (5).

10. Circulator pump comprising an electric motor according to any one of previous claims.
